# EUROPÄISCHE PATENTSCHRIFT

(11) **EP 1 309 746 B1**
(45) Veröffentlichungstag und Bekanntmachung des Hinweises auf die Patenterteilung: **01.10.2008**
(21) Anmeldenummer: 01911448.7
(22) Anmeldetag: 16.02.2001
(51) Int. Cl.: D06C 3/00

(54) **KONSTRUKTION ZUR VARIABLEN VERSTELLUNG DER PLEUELLÄNGE SOWIE DER VARIABLEN VERSTELLUNG DES KURBELWELLENWANGENHEBELS EINES HUB-KOLBEN-MOTORS**
CONSTRUCTION FOR VARIABLY ADJUSTING THE CONNECTING ROD LENGTH AND THE CRANKSHAFT WEB LEVER OF A RECIPROCATING PISTON ENGINE
DISPOSITIF DE REGLAGE DE LA LONGUEUR DE BIELLE ET DU CULBUTEUR DE JOUE D'ARBRE-MANIVELLE D'UN MOTEUR A PISTONS ALTERNATIFS

(30) Priorität: 18.02.2000 DE 10007384
(43) Veröffentlichungstag der Anmeldung: 14.05.2003
(73) Patentinhaber: Friedrich, Rainer, 21339 Lüneburg (DE)
(72) Erfinder: Friedrich, Rainer, 21339 Lüneburg (DE)
(86) Internationale Anmeldenummer: PCT/DE2001/000542
(87) Internationale Veröffentlichungsnummer: WO 2001/065001

(56) Entgegenhaltungen:
- WO-A-98/01656
- US-A- 1 553 009
- US-A- 4 044 629
- US-A- 5 158 047
- PATENT ABSTRACTS OF JAPAN vol. 018, no. 237 (M-1600), 6. Mai 1994 (1994-05-06) & JP 06 026359 A (MUNEMITSU ISE), 1. Februar 1994 (1994-02-01)

## Beschreibung

### Stand der Technik:

Hub-Kolben-Motore herkömmlicher Art, weisen eine Kurbelwelle mit einem Kurbelzapfen auf, wobei der Pleuelfuß direkt mit einem Gleitlager auf dem

Kurbelwellenzapfen gelagert ist.
Eine Konstruktion zur variablen Pleuelverlängerung sowie zur Verstellung
des Kurbelwellenwangenhebels ist aus dem Dokument W09801656 bekannt.
Diese Konstruktion weist ein Übersetzungsverhältnis zwischen Exzenter und Kurbelwelle von 1 : 2 auf.

### Problem:

Der Erfindung liegt die Aufgabe zugrunde, einen Hub-Kolben-Motor zu schaffen, der in seiner Wirkungsweise so konstruiert ist, daß der mit herkömmlichen Hub-Kolben-Motoren verbrauchte Kraftstoff (Benzin / Diesel / Bio Diesel / Gas) oder andere über dem Kolben verbrennbare Materialien, oder Druck erzeugende Brennstoffe, bei gleicher Leistung eines herkömmlichen Hub-Kolben-Motors, erheblich reduziert werden.

### Lösung:

Dieses Problem wird mit dem in Anspruch 1 aufgeführten Merkmalen gelöst.

### Beschreibung eines Ausführungsbeispiels:

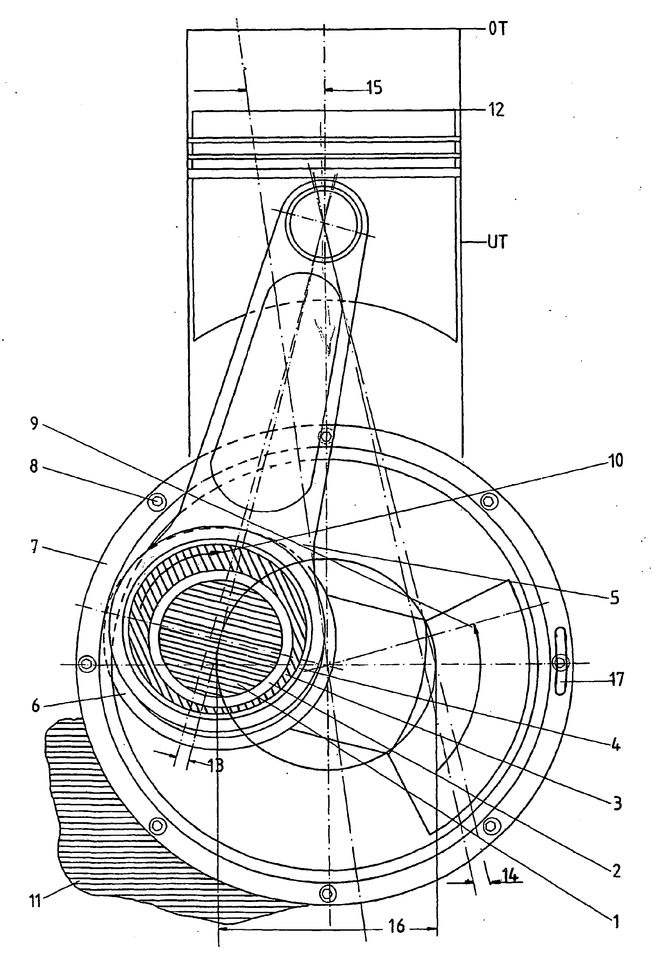

Ein Ausführungsbeispiel der Erfindung wird anhand der beiliegenden Zeichnung erläutert.
In der Zeichnung ist zu erkennen, daß um den herkömmlichen Kurbelwellenzapfen ein Exzenter mit intrigierten Zahnrädern, rechts und links, gelagert ist.
Die Zeichnung, zeigt allerdings nur eine Seite in Draufsicht.
Um diesen Exzenteraußendurchmesser ist wiederum ein Gleitlager angebracht, welches mittels Pleuelfußhalbschalen gehalten wird.
Die seitlich an dem Exzenter angebrachten Zahnräder bewegen sich bei der Kurbelwellendrehung in den beiden Hohlrädern, entgegengesetzt der Kurbelwellendrehrichtung.
Das Übersetzungsverhältnis zwischen den Exzenterrädern und den Hohlrädern ist 1:1. Das heißt, das die Kurbelwelle 360° dreht und der Exzenter ebenfalls um 360 ° verdreht wird.
Die Unwucht der Exzenterotation wird durch Gegengewichte ausgeglichen.
Im oberen Totpunkt des Kolbens steht die Kurbelwelle ebenfalls im oberen Totpunkt. Der Pleuelfuß mit dem Exzenter ist jedoch um eine bestimmte Gradzahl in Drehrichtung der Kurbelwelle vorgelagert.
Der Vorteil hiervon ist, daß der Anfangsverbrennungsdruck bereits auf einen bestimmten Winkel wirken kann.
Bei Drehung der Kurbelwelle und herabgehenden des Kolbens ( im Arbeitstakt) wird der Exzenter durch die Kurbelwellendrehung über die Hohlräder und die Zahnräder entgegengesetzt der Kurbelwellendrehrichtung angetrieben. Hierbei wird die Pleuelstange mit dem Kolben gemäß dem Maß der Exzenterauslegung in Richtung oberer Totpunkt verschoben oder gehalten. Der zeitliche Ablauf der Kolbengeschwindigkeit wird im Wirkungsbereich des Arbeitstaktes verlangsamt wobei die Geschwindigkeit der Kurbelwelle beibehalten wird.
Hieraus resultiert, daß die Verbrennung eine weitaus größere Zeit zur Verfügung hat. Die Exzenter-Auslegung geschieht über den Bereich 90 Grad Kurbelwellenwinkel ( größter Hebelweg) hinaus. Dadurch wird der Raum im Zylinder zwischen dem O.T. und dem Kolbenboden verkleinert.
Hierdurch wird erreicht, daß der Gasdruck, der sich nach der Zündung (Verbrennung) gebildet hat, in dem verkleinerten Raum über dem Kolbenboden einen wesentlich höheren Druck auf den Kolben im größten Hebelweg der Kurbelwelle ( Kurbelwelle und Pleuelstange bilden eine Winkel von 90 Grad) gegenüber herkömmlichen Kolbenmotoren ausübt.
Ein weiterer Vorteil meiner Erfindung liegt darin, daß wie schon beschrieben, eine Hebelvorlagerung im oberen Totpunkt des Kolbens und der Kurbelwelle durch den Pleuelfuß bzw. Exzenter erreicht wird. Bei Drehung der Kurbelwelle im Arbeitstakt bis über 90 Grad wird weiter erreicht, daß der Hebelweg der Kurbelwelle bzw. der Kurbelwellenwange, durch die Anordnung des Exzenters, positiv,das heißt verlängert wird.

Bei einem konkreten Ausführungsbeispiel
(z.B. Hub 80mm, Kurbelwellen-Wangen Hebelweg 40 mm) wird nach Anordnung des Exzenters der Hebelweg z.B. von 40 mm um das Maß X der Auslegung des Exzenters an dieser Stelle verlängert.

Dieses hat zur Folge, daß ein weitaus höheres Drehmoment erzielt wird.

Im Kompressionstakt wird der Kurbelwellen-Wangen Hebelweg durch die Exzenteranordnung negativ, das heißt er wird verkürzt. ( z.B. Hub 80 mm Kurbelwellen-Wangen Hebelweg 40 mm, nach Anordnung des Exzenters um das Maß X verkürzt) Die Folge hiervon ist, daß der Gegendruck auf der Kurbelwelle, der durch das Komprimieren entsteht, wesentlich geringer ist.

Den ursprünglichen Druck, der bei herkömmlichen Kolbenmotoren, bei gleicher Kurbelwellenstellung 90 Grad, (größter Hebelweg) sowie größerem Raum über dem Kolben vorhanden ist, läßt sich bei meiner Erfindung durch Kraftstoffreduzierung erreichen.

Ein weiterer Vorteil ist, daß das Hohlrad mechanisch, hydraulisch oder elektromagnetisch verstellt werden kann. Hierdurch wird eine noch bessere Wirtschaftlichkeit erreicht.

Damit ist bei gleichem Hubraum, die Leistung, trotz wesentlich geringerem Kraftstoffverbrauch, mit meiner Erfindung gegenüber herkömmlichen Kolbenmotoren identisch.

Der Wärme - Wirkungsgrad sowie der Mechanische-Wirkungsgrad der Hub-Kolben-Motore wird durch meine Erfindung wesentlich verbessert. (Wärme-Wirkungsgrad ca. 69 %) (Mechanischer Wirkungsgrad 94 %)

Eine Berechnung meiner Erfindung wurde durch einen Motoren Ing. einer technischen Universität durchgeführt.
Es wird in der Berechnung bestätigt, bei der eine bestimmte Exzenterauslegung angenommen wurde, daß die Leistung meiner Motorenkonstruktion
gegenüber der, eines herkömmlichen Kolbenmotors bei gleichem Kraftstoffverbrauch um mehr als das dreifache ansteigt.
Insofern läßt sich die Leistung meiner Erfindung durch **Kraftstoffreduzierung** und Reduzierung der Motordrehzahl auf die Leistung eines herkömmlichen Hub-Kolben-Motors reduzieren.
Eine andere Möglichkeit wäre z.B. den Hubraum von 2000 ccm auf 1000 ccm zu verringern und damit das Gewicht zu reduzieren wobei die Leistung eines 2000 ccm Motors bei gleicher Drehzahl trotz Kraftstoffreduzierung erhalten bleibt.

### Erreichte Vorteile :

Mit der Erfindung wird erreicht, daß der Kraftstoffverbrauch bei Hub-Kolben-Motoren über den gesamten Drehzahlbereich des Motors, sowohl bei Benzin, Diesel, Gas oder andere über dem Kolben zur Verbrennung von Druckerzeugenden Brennstoffen, erheblich bis zu 50% oder mehr, gesenkt wird.

Die durch die Verbrennung von Benzin, Diesel, Gas oder anderen über dem Kolben zur Verbrennung geeigneten Materialien entstehenden Schadstoffemissionen wie CO, CO2, HC, NOX und Dieselruß werden gegenüber konventionellen Hub-Kolben-Motoren durch meine Konstruktion in ganz erheblicherweise reduziert.

Katalysatoren die heute in der Lage sind, Schadstoffe konventioneller Hub-Kolben-Motoren bis zu ca. 65 % bis zu ca. 70 % der Motorleistung zu absorbieren, werden mit der von mir entwickelten Konstruktion, durch die Kraftstoffreduzierung, nahezu 100 % leistungsfähiger sein.

Durch die Verbrennung von Wasserstoff, im Brennraum meiner Konstruktion, wird eine Schadstoffemission wie CO, CO2, HC, NOX, und Dieselruß gänzlich aufgehoben.

Die Verbrennung von Erdgas, im Brennraum meiner Konstruktion, bei der die fehlende Wärme -Kilokalorie gegenüber Benzin bekannt ist, ist mit meiner Konstruktion ausgleichbar.

Der Vorrat an Erdgas soll nach meiner Erkenntnis unendlich sein.

Insofern ist die Möglichkeit gegeben, den Vorrat an Erdöl der zur Zeit noch für 40 Jahre vorhanden sein soll, auf mindestens 100 Jahre und mehr zu verlängern.

Der Schadstoff "Dieselruß", sofern von der Dieselverbrennung nicht abgewichen wird, wird durch meine Konstruktion in gleicher Weise, wie der Dieselverbrauch, reduziert.

Durch die Reduzierung des Dieselrußes wird die Gefahr des Lungenkrebses für die Bevölkerung erheblich reduziert.

Weiterhin kann durch Hubraumreduzierung eine damit verbundene Gewichtsreduzierung des Motors erreicht werden.

Unter Bezugnahme auf ein von mir konstruiertes funktionsfähiges Modell unter gleicher Bemaßung z.B. 2000 ccm und 5.500 N wurden gegenüber konventionellen Hub-Kolben-Motoren bei gleichem Kraftstoffverbrauch folgende Daten errechnet.
1. Der mittlere Arbeitsdruck erhöht sich von 6,788 bar auf 30,435 bar,
2. dadurch steigt die Leistung in KW von 62,223 KW auf 278,97 KW,
3. das Drehmoment steigt von 110,38 Nm auf 494,07 Nm,
4. der Wärme-Wirkungsgrad steigt von 35-40 % auf 69,26 %,
5. durch die variable Verstellung des Kurbelwellenwangenhebels in den positiven Bereich (Verlängerung) über den Bereich 0 Grad Kurbelwelle,also O.T. bis über 90 Grad Kurbelwelle im Arbeitstakt, wird das Drehmoment zusätzlich weiter erhöht,
6. durch die Hebelvorlagerung wegen der variablen Verstellung des Kurbelwellenwangenhebels in den positiven Bereich im O.T. der Kurbelwelle wird bereits zusätzlich der Anfangsverbrennungsdruck von ca. 60 bar bei Benzinmotoren und ca. 80 bar bei Dieselmotoren, das Drehmoment noch weiter in die Höhe treiben,
7. im Kompressionstakt, Weg des Kolbens vom U.T. zum O.T., wird durch die variable Verstellung des Kurbelwellen-Wangen-Hebels in den negativen Bereich (Verkürzung) der Wirkungsgrad des Hub-Kolben-Motors meiner Konstruktion vergößert,
8. aus diesem Zahlenmaterial ist zu erkennen, das in der Tat der Kraftstoffverbrauch um bis zu 50 % oder mehr gesenkt werden kann. Die damit verbundene Reduzierung der im Abgas vorkommenden Schadstoffe wie CO, CO2, HC, NOX und Dieselruß ist ebenfalls erkennbar und nachweisbar.
9. Durch Reduzierung der Leistung, auf die Leistung konventioneller Hub-Kolben-Motore, wie in diesem Beispiel von 278,97 KW auf 62,223 KW aus der Berechnung, (heutige Motoren erreichen ca. 91,66 KW) wird die Kraftstoffmenge reduziert.
   Es ist auch eine zweiseitige Möglichkeit gegeben, nämlich: die Kraftstoffmenge erheblich zu reduzieren und die Leistung trotzdem zu erhöhen.
10. Durch meine Konstruktion ist weiterhin die Möglichkeit gegeben, den Hubraum und somit das Eigengewicht des Hub-Kolben -Motors, bei gleichzeitiger Kraftstoffreduzierung zu verringern, wobei die Leistung eines konventionellen Hub-Kolben-Motors entweder beibehalten wird oder trotzdem noch gesteigert werden kann.
11. Durch die in meiner Konstruktion angegebene Verstellung des Exzenters durch das Hohlrad, ist eine noch bessere Wirtschaftlichkeit gegeben.
12.Durch Änderung des Maßes der Exzenterhöhe kann durch Erprobung bis an die Grenze der Möglichkeit gegangen werden und somit ist das Ergebnis im Zusammenspiel zwischen Kraftstoffverbrauchs-Reduzierung, Leistungssteigerung und Hub-Kolben-Motoren Eigengewichts-Reduzierung zu optimieren bzw. zu erforschen.
13.Der Verbrauch von fossilen Brennstoffen wie "Erdöl" wird drastisch reduziert.
14.Dadurch wird der Erdölvorrat von derzeit ca. 40 Jahren auf mindestens 100 Jahre und mehr verlängert.
15.Es ist davon auszugehen, daß das weltweite Klima in erheblicher Weise von dem Schadstoff **"CO2" entlastet wird.**
16.Der nachgewiesenermaßen für den Lungenkrebs verantwortliche Schadstoff "Dieselruß" wird erheblich reduziert.
17. Sofern auf die Verbrennung von Erdöl gänzlich verzichtet wird, ist ein Schadstoff wie "Dieselruß" wegzudenken.
18.Meine Konstruktion gleicht die Minderleistung bei der Verbrennung von Erdgas in vollem Umfang aus.
19.Wird komplett auf die Verbrennung von Erdgas umgestellt, werden die Schadstoffe im Abgas von Hub-Kolben-Motoren, gegenüber Benzin noch weiter reduziert.
20. Sollte es in Zukunft möglich sein, Wasserstoff, der zur Verbrennung in Hub-Kolben-Motoren ebenfalls geeignet ist, in ausreichender Menge herstellen zu können, wird die Entwicklung zumindest nach heutigen Erkenntnissen dahin gehend sein, daß ein Schadstoff im Abgas, der schädlich für die Bevölkerung, für die Tierwelt, die Umwelt und das Klima ist, nicht mehr zu finden sein wird.
21.Um den Verbrennungsdruck bei Benzinmotoren auf ca. 60 bar und bei Diesel Motoren auf ca. 80 bar zu bekommen, ist eine bestimmte Menge von Benzin bzw. DieselKraftstoff erforderlich.
22.Bedingt durch meine Konstruktion, die den Brennraum im Arbeitstakt, durch eine höhere Kolbenstellung auf dem Weg des Kolbens vom oberen zum unteren Totpunkt von 0 Grad Kurbelwelle bis über 90 Grad Kurbelwelle hinweg, also auch im größten Hebelweg der Kurbelwelle (Kurbelwelle und Pleuel bilden einen Winkel von 90 Grad) verkleinert, ist es nunmehr gegeben die **Kraftstoffmenge,** die bei konventionellen Hub-Kolben-Motoren nötig war um 60 bar bei Benzin bzw. 80 bar bei Diesel zu erzeugen, um einen mittleren Arbeitsdruck von 8 bzw. 15 bar an der Kolbenstellung des konventionellen Motors (in größerem Raum) gegenüber meiner Konstruktion (kleinerer Raum) zu behalten, **zu verringern.**
   **Ein Beispiel:**
   Kolbenweg konv. Motor mit 80 mm Hub vom OT nach UT. bis ca. 73 Grad (Diese Zahl richtet sich nach der Pleuellänge) Kurbelwelle (größter Hebelweg, Pleuel und Kurbelwelle bilden einen Winkel von 90 Grad) Kolbenweg 38,5 mm. Der hier vorliegende Gasdruck liegt bei ca. 8-10 bar bei Benzinmotoren und ca. 15-20 bar bei Dieselmotoren.
   Der Kolbenweg meiner Konstruktion bei 80 mm Hub bei 73 Grad Kurbelwelle bei einer bestimmten Exzenter-Auslegung beträgt lediglich 28 mm. Der Gasdruck der hier noch vorherrscht liegt bei Benzin Motoren bei ca. 30 bar und bei Diesel Motoren ca. 45 bar.
   Das Resultat aus dieser Brenn-Raum-Verkleinerung ist eindeutig, nämlich der Anfangsverbrennungsdruck kann durch Kraftstoffreduzierung verringert werden. Somit wird der Gasdruck auf den des konventionellen Hub-Kolben-Motors an dieser erhöhten Stellung des Kolbens reduziert.
23.Die größte Effizienz wird somit beim Einsatz meiner Konstruktion mit Hub-Kolben-Motoren bei Marine Motoren erreicht. Deshalb erreicht, weil diese Motoren ständig unter Last gefahren werden. Bekannt ist, daß der Kraftstoffverbrauch bei Booten usw. erheblich größer ist als bei Pkw im Straßenverkehr mit gleichem Hubraum.
24.Auch dem Bereich der Flugzeuge mit Hub-Kolben-Motoren ist mit meiner Konstruktion erheblicher Vorteil zuzuschreiben, denn die Reichweiten werden erheblich vergrößert.
25.Es dürfte gegeben sein, meine Konstruktion, als Kraftmaschine zur Erzeugung und Betreibung von Strom- Aggregaten einzusetzen.
26.Es könnten in den nächsten 15-20 Jahren ca. 5 Milliarden Pkw Motore und ca. 2,5 Milliarden Lkw, Boots Motoren, Panzer Motore, stationäre Motore usw. eingebaut werden.
27.Dadurch würden ca. 39.500 neue Arbeitsplätze geschaffen werden.
28.Eine Beeinträchtigung, durch die bis heute entwickelten technischen Möglichkeiten, wie Einspritzung, Direkteinspritzung, Common Rail Einspritzung, vier bzw. fünf Ventiel Technik, Saugrohr-Veränderung, Computer gesteuerte Gemischaufbereitung, Computer gesteuertes Zündsystem usw. ist durch meine Konstruktion, nicht gegeben. Diese Techniken können nach wie vor verwendet werden.

## Patentansprüche

1. Konstruktion zur variablen Verstellung der Pleuellänge sowie der variablen Verstellung des Kurbelwellen-Wangen-Hebels eines Hub-Kolben-Motors bei der ein Exzenter (3) mit Drehrichtung
rechts (10) auf einem Kurbelwellenzapfen (1) mit Kurbelwellendrehung links (9), oder umgekehrt, gelagert ist und an diesem Exzenter (3) beidseitig je ein Zahnrad (6) angebracht ist, jedes der Zahnräder in einem innenverzahntem Hohlrad (7) läuft das jeweils links und rechts seitlich der Pleuelstange (5) mit dem Exzenter-Zahnrad (6) in einer Linie angeordnet ist, wobei die Hohlräder (7) mit dem dafür vorgesehenen Motorgehäuse (11) fest verbunden sind und einen festen Widerstand gegenüber den beiden Zahnrädern (6), welche an dem Exzenter angebracht sind, bilden, **dadurch gekennzeichnet daß** das Übersetzungsverhältnis der Zahnräder mit angebrachtem Exzenter zur Kurbelwelle 1:1 ist, das heißt, daß wenn sich die Kurbelwelle um 360 ° dreht, sich die Zahnräder mit Exzenter ebenfalls um 360° drehen.

2. Konstruktion nach Anspruch 1, **dadurch gekennzeichnet, daß** durch Langschlitze (17) das Hohlrad mechanisch, hydraulisch oder elektromagnetisch gegenüber dem Motorgehäuse verstellbar ist.

3. Konstruktion nach Anspruch 1 oder 2 **dadurch gekennzeichnet, daß** die Pleuelstange (5) mit dem Pleuelfuß auf der Außenfläche des Exzenters (3) mittels Gleitlager (4) gelagert ist, oder auch Rollenlager Verwendung finden.

4. Konstruktion nach einem der Ansprüche 1 bis 3, **dadurch gekennzeichnet, daß** der Exzenter (3) selbst aus zwei geteilten Hälften besteht, die mittels Schrauben zusammen geschraubt und damit zerlegbar verbunden sind, oder in einteiliger Bauart konstruiert ist.

5. Konstruktion nach einem der Ansprüche 1 bis 4 **dadurch gekennzeichnet, daß** der Exzenter so angeordnet ist, daß sich eine Hebelverlängerung des Kurbel-wellen-Wangen-Hebels im Arbeitstakt und eine Hebelverkürzung des Kurbel-wellen-Wangen-Hebels im Kompressionstakt ergibt.

6. Konstruktion nach einem der Ansprüche 1 bis 5 **dadurch gekennzeichnet, daß** sich durch die besondere Anordnung des Exzenters eine Hebelvorlagerung der Pleuelstange (5) im Kurbelwellen OT. ergibt, der zu einer Raumverkleinerung über dem Kolbenboden ( 12) führt und im Arbeitstakt einen wesentlich höheren Arbeitsdruck bewirkt, der bei gleichem Kurbelwellen-Winkel diesen höheren Arbeitsdruck auf die Kurbelwelle überträgt und ein wesentlich höheres Drehmoment des Motors erzeugt.

7. Konstruktion nach einem der Ansprüche 1 bis 6 **dadurch gekennzeichnet, daß** die besondere Konstruktion für die Motoren-Bauart: Reihe, V. oder Boxer geeignet ist.

8. Konstruktion nach einem der Ansprüche 1 bis 7 **dadurch gekennzeichnet, daß** die Unwucht durch Gegengewichte ausgeglichen wird. Auch kann der Hubraum, aufgrund eines hohen Arbeitsdruckes reduziert werden.

## Claims

1. Design permitting the variable length adjustment of the piston rod as well as the variable setting of the crankshaft cheek lever of a reciprocating-piston engine, in which a cam (3), rotating in a clockwise direction (10), is mounted on a crankshaft journal (1) turning in a counterclockwise direction of rotation (9) of the crankshaft, or vice versa, said cam (3) is flanked on both sides by a gear wheel (6) each of which rotates within an internal geared wheel (7) laterally aligned respectively to the left and right of the piston rod (5) with the cam gear (6), while the internal geared wheels (7) are firmly attached to the engine enclosure (11), constituting a point of solid resistance to the two gear wheels (6) attached to the cam, **characterized by** establishing a 1:1 speed ratio between the gear wheels with integrated cam and the crankshaft, so that a 360° rotation of the crankshaft causes the gear wheels with the cam to turn 360°.

2. Design as in claim 1, **characterized in that** elongated slots (17) allow the internal geared wheel to be shifted relative to the engine enclosure by mechanical, hydraulic or electromagnetic means.

3. Design as in claim 1 or 2, **characterized in that** the big end of the piston rod (5) is supported on the outer surface of the cam (3) via friction bearings (4) or, alternatively, roller bearings.

4. Design as in one of the claims 1 to 3, **characterized in that** the basic cam (3) consists of two separate halves held together by screws and thus connected in detachable fashion, or that it is configured as a one-piece unit.

5. Design as in one of the claims 1 to 4, **characterized in that** the cam is so positioned that in the working cycle the leverage path of the crankshaft cheek lever is extended while in the compression cycle the leverage path of the crankshaft cheek lever is shortened.

6. Design as in one of the claims 1 to 5, **characterized in that** the special geometric positioning of the cam results in a lever-action forward shift of the piston rod (5) in the upper dead centre of the crankshaft which reduces the clearance above the piston head (12), thus generating a substantially higher operating pressure in the working cycle whereby, at the same crankshaft angle, that augmented operating pressure is transferred to the crankshaft, producing a significantly higher engine torque.

7. Design as in one of the claims 1 to 6, **characterized in that** the special configuration described can be employed in in-line, V-type, as well as opposed-cylinder engines.

8. Design as in one of the claims 1 to 7, **characterized in that** counterweights are provided to compensate for the flywheel effect. Also the engine capacity can be reduced, due to a high operating pressure.

## Revendications

1. Construction pour un déplacement variable de la longueur de bielle ainsi que pour un déplacement variable du levier des flasques du vilebrequin d'un moteur à pistons alternatifs pour laquelle un excentrique (3) avec un sens de rotation à droite (10) est logé sur un maneton de vilebrequin (1) avec une rotation du vilebrequin à gauche (9), ou inversement, une roue dentée (6) étant respectivement placée des deux côtés de cet excentrique (3), chacune des roues dentées tournant dans une roue à denture intérieure (7) et étant respectivement disposée latéralement à gauche et à droite de la bielle (5) en ligne avec la route dentée de l'excentrique (6), les roues à denture intérieure (7) étant reliées solidairement au carter de moteur (11) prévu à cet effet et formant une résistance solide par rapport aux deux roues dentées (6) installées sur l'excentrique, **caractérisée par le fait que** le rapport de transmission des roues dentées incluant l'excentrique installé par rapport au vilebrequin étant de 1:1, ce qui signifie que si le vilebrequin tourne de 360°, les roues dentées tournent avec l'excentrique également de 360°.

2. Construction selon la revendication 1, **caractérisée par le fait que**, au moyen de fentes longitudinales (17), la roue à denture intérieure est déplaçable mécaniquement, hydrauliquement ou électromagnétiquement par rapport au carter du moteur.

3. Construction selon la revendication 1 ou 2, **caractérisée par le fait que** la tête de la bielle (5) est placée sur la surface extérieure de l'excentrique (3) à l'aide d'un palier lisse (4), ou bien en utilisant également des roulements à rouleaux.

4. Construction selon l'une des revendications 1 à 3 **caractérisée par le fait que** l'excentrique (3) lui-même est soit composé de deux moitiés séparées qui sont assemblées conjointement à l'aide de vis et par conséquent qui sont reliées en pouvant être démontables, soit construit en une seule pièce.

5. Construction selon l'une des revendications 1 à 4 **caractérisée par le fait que** l'excentrique est disposé de sorte qu'il en ressort des allongements du levier des joues du vilebrequin en cycle de travail et une réduction du levier des joues de vilebrequin en cycle de compression.

6. Construction selon l'une des revendications 1 à 5 **caractérisée par le fait qu'**en raison de la disposition particulière de l'excentrique il en ressort un montage en amont du levier de la bielle (5) au point mort supérieur du vilebrequin qui occasionne une diminution dans l'espace au-dessus de la tête de piston (12) et en cycle de travail génère une pression effective plus élevée, qui, pour le même angle de vilebrequin, transmet cette pression effective plus élevée au vilebrequin et génère un couple moteur beaucoup plus élevé.

7. Construction selon l'une des revendications 1 à 6 **caractérisée par le fait que** la construction particulière est appropriée pour les types de moteurs : en ligne, en V ou Boxer.

8. Construction selon l'une des revendications 1 à 7, **caractérisée par le fait que** le balourd est équilibré par des contrepoids. Le moteur capacité, peut également être réduit sur la base d'une pression de travail élevée.
